(19) Europäisches Patentamt
European Patent Office
Office européen des brevets

(11) **EP 2 752 393 A1**

(12) **EUROPEAN PATENT APPLICATION**

(43) Date of publication:
**09.07.2014 Bulletin 2014/28**

(51) Int Cl.:
**C03B 40/02** (2006.01)

(21) Application number: **13150024.1**

(22) Date of filing: **02.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **IPGR International Partners in Glass Research 8180 Bülach (CH)**
• **Nederlandse Organisatie voor Toegepast -Natuurwetenschappelijk Onderzoek TNO 2628 VK Delft (NL)**

(72) Inventors:
• **Roos, Christian, Dr.**
  **8180 Bülach (CH)**
• **Gubbels, Godefridus Hendricus Marta**
  **5704 AX Helmond (NL)**

(74) Representative: **Blaumeier, Jörg**
**Lindner Blaumeier**
**Patent- und Rechtsanwälte**
**Partnerschaftsgesellschaft mbB**
**Dr.-Kurt-Schumacher-Strasse 23**
**90402 Nürnberg (DE)**

(54) **Device for handling hot melted glass and method for making such a device**

(57) Device for handling hot melted glass, comprising a body being at least partially provided with a coating for contacting the hot melted glass, whereby the coating comprises a basic matrix based on a metal or a metal and a metal oxide, with embedded particles made of a salt acting as a solid lubricant and having a melting point of more than 800°C, especially more than 1000°C.

## FIG. 1

Printed by Jouve, 75001 PARIS (FR)

## Description

The invention relates to a device for handling hot melted glass, comprising a body being at least partially provided with a coating for contacting the hot melted glass.

In the glass making industry it is necessary to handle the hot melted glass, which has a temperature of approximately 1000°C or less, by means of special devices like rollers, drums, chutes or moulds being specifically designed for this handling purpose. A device the invention relates to usually comprises a body being designed in accordance with the handling purpose, which body is at least partially provided with a special coating for contacting the hot melted glass. This coating is designed to allow a proper transport of the hot glass along the device, thus it provides a kind of lubrication for the device handling the swabbing or non-swabbing product. The lubrication, i.e. the provision of the coating, is therefore obviously an important factor to ensure a proper handling. But known coatings rapidly deteriorate when getting in contact with the glass. A deteriorated coating does not provide the lubrication necessary for proper handling of the glass, leading to problems like defects in the finally made glass product, waste products or finally a stop of the production line. The lubrication is very important in the making of formed glass products, being produced in a blow-blow-process, a press-blow-process or in a narrow-necked-press-blow-process using respective moulds corresponding to the shape of the product to be produced like hollow glass ware. The lubrication is necessary to ensure a good loading of the glass drop in the mould. If the loading is insufficient defects in the produced container glass ware can occur, further problems as depicted above can arise. In the container glass industry it is therefore necessary to renew the coating, usually in short intervals from 10 to 30 minutes. A renewal of the coating or the lubrication is time consuming and costly, additional man power is needed for changing the device and providing a new coating. Finally the production process is interrupted for a certain time for changing the device.

As depicted above container ware is produced by using different processes, with each process having specific moulds. In the press-blow-procedure the loading of the moulds is quite easy due to the kind and geometry of the mould resulting in a comparably lower need for lubrication. The narrow-necked-blow-procedure uses moulds which are somehow more difficult in loading process resulting in a higher need for lubrication, while the moulds used in the blow-blow-process are quite complicated in loading resulting from the geometry of the moulds and the blow-blow-process itself, with a comparably high need for a good lubrication respectively coating quality. Certainly the possible problems being faced also depend on the process temperature, i.e. the temperature of the glass and/or the mould. The hotter the glass and/or the mould, the higher the risk, that the glass will stick to the mould during the loading process. This happens when the interface temperature between the glass and the mould reaches the so called "sticking temperature". If the glass is too cold the friction between the glass and the coating is comparably high resulting from the high glass viscosity, while a high friction has negative influence on the loading process.

Independently of the moulding process or the moulds being used the lubrication of the moulds within relatively short intervals is a negative aspect in the glass making industry.

While especially the moulds being used in the various moulding processes need short term renewal of the coating, also other devices comprising a coating for handling hot glass wear in use when the glass moves along the coating of the device, which may be a roller, a drum, a chute, a conduit or the like. When the coating shows wear the glass can also stick to the device leading to problems in the handling process.

To ensure a proper loading of a glass mould it is known to use a lubrication fluid comprising a basic fluid on the basis of a mineral oil and a lubricant like sulphur or graphite. This liquid lubricant is manually coated on the mould, which is obviously disadvantageous, especially in view of the relatively high renewal cycle.

From DE 10 2004 036 343 A1 a coating material is known comprising two separate coatings, with a first coating comprising a fixing means on the basis of silicone resin for building a silicone resin layer and an oxidizable filler provided in the silicone resin matrix. The second coating mask also comprises a fixing medium on basis of silicone resin including a filler acting as a lubricant when in contact with the glass. Although this special coating system shows a better wear resistance, there is still a need for a coating having an even better wear resistance to provide devices of high endurance.

To solve the above problem the invention provides a device for handling hot melted glass, comprising a body being at least partially provided with a coating for contacting the hot melted glass, which device is characterized in that the coating comprises a basic matrix based on a metal or a metal and a metal oxide, with embedded particles made of a salt acting as a solid lubricant and having a melting point of more than 800°C, especially more than 1000°C.

The inventive device is provided with a very special coating comprising a basic matrix based on a metal or a metal and a metal oxide. In this basic matrix a special filler is embedded, i.e. a salt acting as a lubricant. This salt is embedded in a very stable basic matrix. The lubricant itself is also thermally very stable having a melting point of more than 800°C, especially more than 1000°C. The glass to be handled with the inventive devices usually has a temperature of approximately 700°C, thus the lubricant is stable at the process temperature. Certainly also the basic matrix is selected to be thermally stable at the process temperatures.

It was surprisingly found that the endurance of a coating built by a metal or a metal and a metal oxide as basic matrix with embedded particles of a salt is very high and that the coatings are very stable and allow an ongoing use for many hours. Several tests with specific coatings showed runtimes without relubrication of more than 12 hours, some of more than 24 hours. It is assumed that this high stability results from one or more of the following properties: very high resistance of the basic matrix against oxidation and a very high mechanical stability, a high contact angle to the glass and a high thermal conductivity. The thermally stable particles of the salt participate from the high stability of the basic matrix into which they are embedded, thus the tendency to abrasion is quite low and the particles can provide their lubricating properties for a long time.

According to the invention the coating is designed to have an average dynamic friction coefficient of less than 0,4, and/or an average static friction coefficient of less than 0,9, both at temperatures between 350°C - 550°C, with a thermal conductivity of more than 45 W/mK. Thus metal or metal and metal oxide making the basic matrix and the particles made of the salt are selected to build a coating showing the above specific parameters, being measured over a certain time at a predetermined temperature similar to the temperature the coating is subjected in the manufacturing process, which temperature is somehow lower than the temperature of the glass due to a cooling of the surface of the glass in contact with the coating. Typical temperatures are about 450°C - 650°C, with a glass temperature of about 700°C within the bulk glass.

The need for a high thermal conductivity of preferably more than 45 W/mK and of a dynamic friction coefficient of less than 0,4 above 350°C are contrary needs, since the tendency for sticking to the device can be reduced by a lower temperature and thus a high viscosity of the glass, while a lower friction coefficient is promoted by a high temperature and thus a low viscosity of the glas. To achieve the above goals the matrix material is preferably based on a selection of Ni, Al, Al-$Al_2O_3$, Ni-Al-$Al_2O_3$,Ni-$Al_2O_3$, Sn, Zn or Si with the particles being preferably selected of $CaF_2$ and/or $BaF_2$. Building the basic matrix of the above materials provides a basic matrix with a very high resistance against oxidation. The basic matrix shows a very high mechanical stability and an excellent thermal conductivity. The particles made of $CaF_2$, $BaF_2$ or a (preferably eutectic) mixture of $CaF_2$/$BaF_2$ show excellent lubrication properties, leading to a coating with an average dynamic friction coefficient of less than 0,4 and an average static coefficient of less than 0,9, and with a thermal conductivity of more than 45 W/mK.

The weight ratio of particles to basic matrix in the final coating should be between 0,01 - 0,7, preferably between 0,02 - 0,5 and especially between 0,05 - 0,3. The share of the particles acting as solid lubricant is responsible for the dynamic friction coefficient. The higher the share of particles, the lower the dynamic friction coefficient. In contrary the properties of the basic matrix are negatively influenced, the higher the share of the particles is. Thus a proper ratio between particles and basic matrix lies within the above maximum interval, while it is most preferably between 0,05 and 0,3.

The particles preferably have a grain size of less than 100μm, preferably of less than 70 μm and especially of less than 50μm. Most preferably they are smaller than 40 μm. The smaller the particles, the tighter their embedding in the basic matrix and the lower the risk, that they can break out of the coating surface. They should preferably have a spherical shape, while the can also be polygonal.

The coating itself preferably has a thickness between 10 μm and 1500 μm, preferably between 30 μm and 1200 μm, and especially between 50 μm and 1000 μm. A thickness lying within the last interval is preferred, with a minimal thickness of approximately 50 μm having enough reserve in view of abrasion, while a maximum thickness of 1000 μm still shows a very good bonding of the coating to the body. A thicker coating may not necessarily show better properties.

It is possible to add a further filler to the basic matrix, for example Zn or Sn incorporations which may enhance the stability of the basic matrix even more.

The basic matrix preferably is built as a non-porous matrix ensuring the tight and firm embedding of the particles and avoiding the particles to brake out of the basic matrix, especially in combination with relatively small particles, since large particles of 100 μm and more tend to brake out even of a non-porous basic matrix.

The device itself can be of any kind being used in the glass making industry for handling hot melted glass, as long as the glass is still hot and formable. The inventive device may be a mould, a roller, a drum, a chute or a conduit, while this listing is not restrictive.

The body comprising the coating is preferably made of steel, cast iron or bronze, thus having a high stability itself.

The invention further relates to a method of making a device according to the above description, comprising the following steps:

- providing a layer comprising a basic matrix of a metal or a metal and a metal oxide, with embedded particles made of a salt on a body of the device, and

- if necessary mechanically working, especially grinding and polishing the hard layer for preparing a coating with a contact surface for contacting hot melted glass.

If necessary the layer provided in the first step being built by the basic matrix and the embedded particles is worked especially by grinding and/or polishing after hardening in order to prepare a very smooth contact surface, along which the hot melted glass is transported. If the surface of the hardened layer is already smooth enough after the coating and hardening step no further mechanical working is necessary.

There are several various methods to provide the layer on the body. The layer may be formed either by slurry coating or by spraying. With a layer built by slurry coating the layer is sintered after it is coated on the body, with a sinter temperature preferably of about 1000°C or less for about 30 min, if need be under vacuum, followed by a cooling step, for example by using nitrogen. Alternatively the layer can be sprayed on the surface of the body, either by hot spraying or by cold spraying, or flame spraying

The material building the basic matrix is selected of Ni, Al, Al-Al$_2$O$_3$, Ni-Al-Al$_2$O$_3$ or Ni-Al$_2$O$_3$, and the particles being selected of CaF$_2$ and/or BaF$_2$. The particles made of CaF$_2$ or BaF$_2$ show a very good thermal stability, with CaF$_2$ having a melting point of 1423°C and with BaF$_2$ having a melting point of 1355°C. Depending on the device and the use of the device the respective material for the basic matrix is used. As depicted above either Ni, Al or mixtures of these materials together with Al$_2$O$_3$ can be used. Thus the thermal stability of the basic matrix and the respective properties of the matrix can be adjusted by using the respective materials needed to provide a basic matrix having the needed properties. Since Ni has a melting point of 1455°C and with Al$_2$O$_3$ having a melting point of 2050°C it is possible to provide extremely stable basic matrices, although Al is incorporated having a comparably low melting point of 660°C. Since the surface temperature of the glass in contact with the coating especially in the molding process is about 600°C, also pure Al can be used for building the basic matrix.

The materials for building the coating are preferably selected with a ratio of particles to basic matrix being between 0,01 - 0,7, preferably between 0,02 - 0,5 and especially between 0,05 - 0,3. The coating itself is made according to the inventive method having a thickness between 10 $\mu$m - 1500 $\mu$m, preferably between 30 $\mu$m - 1200 $\mu$m, and especially between 50 $\mu$m - 1000 $\mu$m. A preferred thickness is less than 700 $\mu$m, especially less than 500 $\mu$m.

The body being provided with the inventive coating may be designed to build a mould, a roller, a drum, a chute or a conduit, while other devices for handling hot glass may certainly also be built according to the inventive method.

Further advantages and features of the invention are explained below by means of several specific embodiments of the invention and the figures.

Fig. 1 is a diagram showing dynamic friction coefficient versus measuring time for a first coating,

Fig. 2 is a diagram showing dynamic friction coefficient versus measuring time for a second coating, and

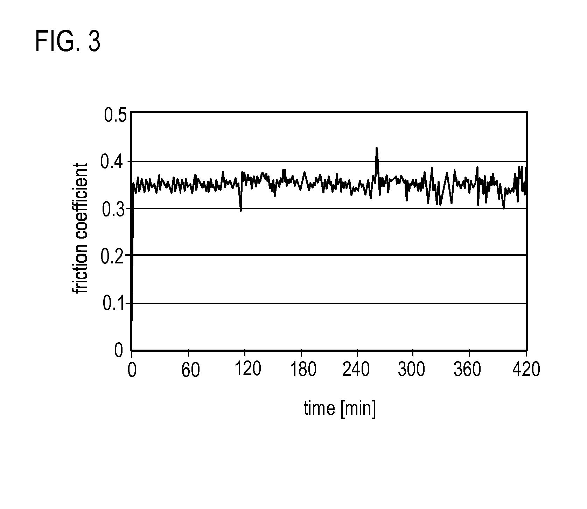

Fig. 3 is a diagram showing dynamic friction coefficient versus measuring time for a third coating.

Three different coatings according to the invention were prepared for conducting various tests. Below the respective coatings, their preparations and the respective test results are explained.

In each example a mold for a blow-blow-process was coated and used in an IS-machine for the production of a 0,751 bottle until the mold resp. the coating showed wear leading to waste products. Furthermore a cast iron ring was coated with exactly the same coating as prepared for conducting various measurements to evaluate various coating parameters.

The following measurements were conducted with the test ring:

- static friction coefficient (average)
- dynamic friction coefficient (average)
- thermal conductivity (estimated)
- hardness.

The mould itself was installed in an IS-machine for preparing 0,75 l bottles for blow-blow-process, with the mould being used without any lubrication until the produced bottles showed defects.

The hardness was measured with a calibrated Zwick (type 3212) hardness tester using application of a load of 1 kg for 15 sec.

The friction coefficient (static and dynamic) was measured with a home-made ring tribometer. The cast iron ring with the coating rotates and is heated by induction heating. The surface velocity during friction measurement is chosen to be 0,05 m/s. A glass piece with an area of one square cm is pushed within a normal force of 50 N (corresponding to 5 bar) on the heated ring. The torque of the rotating wheel is measured resulting in a forward force needed to move the ring under the glass piece. The ratio of the forward force and the normal force is the dynamic friction coefficient. The static fiction coefficient was measured as the brake away torque of the rotating ring versus the glass piece.

The thermal conductivity of the coating is estimated from a linear model using the volume fractions. In each example the volume fraction of the metal is larger than 25 volume% (i.e. larger than the percolation threshold). The heat conductivity of the coating is estimated as

$$HC = \sum_i V_i \bullet \lambda_i,$$ with $V_i$ and $\lambda_i$ being the volume

fraction and heat conductivity respectively of the metal, the alumina and fluoride.

## 1. Coating 1

The first coating was prepared with 75 wt% Ni and 25 wt% (Ba, Ca)F$_2$, i.e. an eutectic mixture of BaF$_2$/CaF$_2$. This mixture was prepared as a slurry and was coated on a mould with a body made of cast iron, used for preparing a 0,75 l bottle in a blow-blow-process. The slurry was also coated on a cast iron ring as a sample for hardness measurement and friction coefficient measurement.

After the slurry was coated on the mould and the cast iron test ring the slurry was sintered at 1000°C for 30 min under vacuum. Then the mould and the test ring were cooled until 690°C according to the characteristic line of the furnace, and afterwards nitrogen was used for a more rapid cooling. The mould and the test ring were grinded and polished afterwards. The thickness of the respective coating was between 300 μm and 450 μm.

After the preparation the coating was analysed by an SEM/EDX-analysis, showing that 20 wt% of the solid lubricant, i.e. $(Ba,Ca)F_2$ was incorporated in the coating.

The following test results were received, with the test ring being heated during the tests to 550°C:

- static friction coefficient f<0,6 (average value for at least 10 measurements)
- dynamic friction coefficient f=0,27 (average value over the measurement time)
- heat conductivity λ > 45 W/mK
- hardness HV1 = 12,7
- runtime of the mould in the IS-machine without relubrication until first defects at the produced bottles occurred: 36 h.

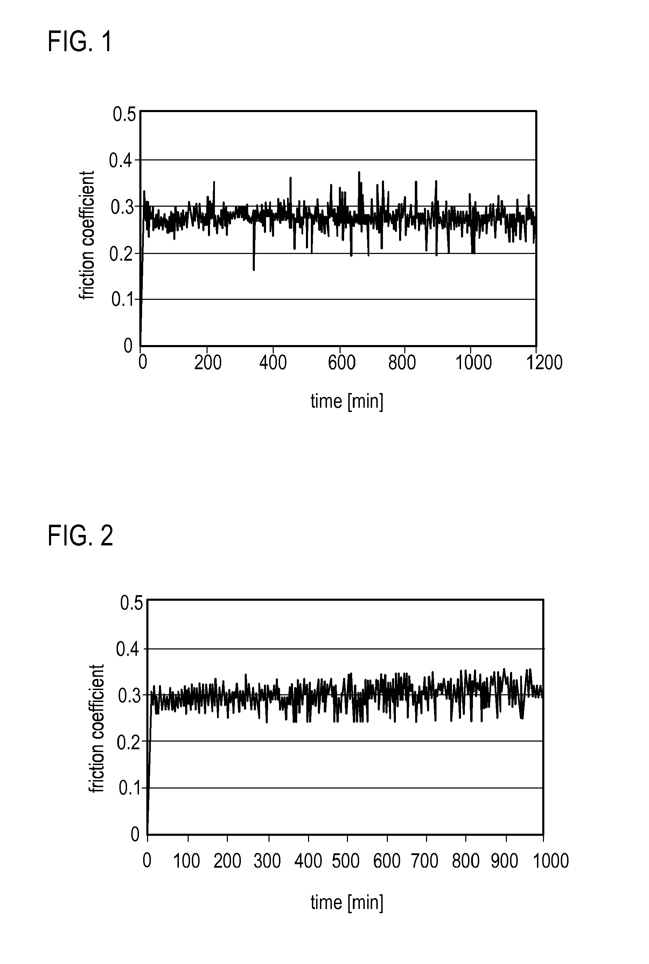

Beside the enormous runtime of 36 h especially the dynamic friction coefficient is an important parameter showing the excellent lubricating properties of the coating. According to fig. 1 the friction coefficient was measured for 1200 min, i.e. 20 h. As can be taken from the fig. the dynamic friction coefficient maintained the same level and did not change, beside any smaller measurement tolerances. The average dynamic friction coefficient according to all single measurement points was 0,27.

## 2. Coating 2

The second coating according to the invention was prepared by low-pressure-cold-spaying using a robot. The starting material was a mixture of 48 wt% $Al_2O_3$, 32 wt% Al and 20 wt% $(Ba,Ca)F_2$, i.e. an eutectic mixture of $BaF_2/CaF_2$. This mixture was sprayed on a cast iron body, i.e. a mould for the preparation of a 0,75 l bottle in a blow-blow-process and a respective cast iron test ring for conducting the respective measurements.

The thickness of the coating was between 500 μm and 800 μm. The SEM/EDX-analysis of this coating showed that 7 wt% of the $(Ba,Ca)F_2$-solid particles were incorporated in the coating.

The same measurements as depicted above were conducted, the friction coefficient was measured for 1000 min., see fig. 2. The following results were received with a second inventive coating, with the test ring being heated during the tests to 500°C:

- static friction coefficient f<0,8 (average value for at least 10 measurements)
- dynamic friction coefficient f=0,3 (average value over the measurement time)
- heat conductivity λ > 45 W/mK
- hardness HV1 = 74,8
- runtime of the mould in the IS-machine without relubrication until first defects at the produced bottles occurred: 41 h.

As shown by the test results this coating was even more stable than the first coating, it had a total runtime without relubrication of 41 h, with an even lower friction coefficient. Also these test results show the excellent properties of an inventive coating.

## 3. Coating 3

A third coating was prepared by manual low-pressure-cold-spraying of the coating material on a mould and the test ring. The starting material comprised 84 wt% $Ni/Al_2O_3$ and 16 wt% $CaF_2$. It was sprayed on the cast iron mould for the preparation of 0,75 l bottle in a blow-blow-process as well as on the test ring used for making the measurements.

The SEM/EDX-analysis show 4 wt% of the $CaF_2$-solid lubricant particles were incorporated in the coating. The thickness of the coating was between 100 μm and 150 μm.

After conducting the respective tests (the friction coefficient was measured for 420 min.) and using the mould the following results were received, with the test ring being heated during the tests to 510°C:

- static friction coefficient f<0,74 (average value for at least 10 measurements)
- dynamic friction coefficient f=0,35 (average value over the measurement time)
- heat conductivity λ > 49 W/mK
- hardness HV1 = 145
- runtime of the mould in the IS-machine without relubrication until first defects at the produced bottles occurred: 16 h.

Compared to lubrication coatings of prior art also this coating showed an excellent behaviour, the mould could be used without relubrication for 16 h.

The invention is certainly not restricted to the above three test coatings. It covers the whole range of compositions of the starting materials for preparing the final coating having the ingredients respectively ratios of the materials as depicted and claimed above. Any combination within the claimed ranges is important and inventive.

## Claims

1. Device for handling hot melted glass, comprising a body being at least partially provided with a coating for contacting the hot melted glass, **characterized in that** the coating comprises a basic matrix based on a metal or a metal and a metal oxide, with embedded particles made of a salt acting as a solid lubricant and having a melting point of more than 800°C, especially more than 1000°C.

2. Device according to claim 1, with the coating having a dynamic friction coefficient of less than 0,4 and/or a static friction coefficient of less than 0,9, both at temperatures between 350°C - 550°C.

3. Device according to claim 1 or 2, with the matrix being made of Ni, Al, $Al-Al_2O_3$, $Ni-Al-Al_2O_3$, $Ni-Al_2O_3$, Sn, Zn or Si.

4. Device according to one of the preceding claims, with the particles being made of $CaF_2$ and/or $BaF_2$.

5. Device according to one of the preceding claims, with the weight ratio of particles to basic matrix being between 0,01 - 0,7, preferably between 0,02 - 0,5 and especially between 0,05 - 0,3.

6. Device according to one of the preceding claims, with the particles having a grain size of less than 100 $\mu$m, preferably less than 70 $\mu$m, especially less than 50 $\mu$m, and most preferably less than 40 $\mu$m.

7. Device according to one of the preceding claims, with the particles having a spherical shape.

8. Device according to one of the preceding claims, with the coating having a thickness between 10 $\mu$m -1500 $\mu$m, preferably between 30 $\mu$m - 1200 $\mu$m, especially between 50 $\mu$m - 1000 $\mu$m.

9. Device according to one of the preceding claims, with the basic matrix having Zn or Sn incorporations.

10. Device according to one of the preceding claims, with the basic matrix being non-porous.

11. Device according to one of the preceding claims, with the device being a mould, a roller, a drum, a chute or a conduit.

12. Device according to one of the preceding claims, with the body being made of steel, cast iron or bronze.

13. Method of making a device according to one of the preceding claims, comprising the following step:

    - providing a layer comprising a basic matrix of a metal or a metal and a metal oxide, with embedded particles made of a salt on a body.

14. Method according to claim 13, with the hard layer being mechanically worked, especially by grinding and/or polishing for preparing a coating with a contact surface for contacting hot melted glass.

15. Method according to claim 13 and 14, with the layer being formed either by slurry coating or spraying.

16. Method according to claim 15, with the layer built by slurry coating being sintered, especially at 1000°C or less for about 30 min, especially under vacuum, and cooled, especially by using nitrogen.

17. Method according to claim 15, with the sprayed layer being a hot or cold or flame spraying.

18. Method according to one of the claims 13 to 17, with the material building the basic matrix being selected of Ni, Al, $Al-Al_2O_3$, $Ni-Al-Al_2O_3$, $Ni-Al_2O_3$, Sn, Zn or Si, and with the particles being $CaF_2$ and/or $BaF_2$.

19. Method according to one of the claims 13 to 18, with the materials for building the coating being selected with the weight ratio of particles to basic matrix being between 0,01 - 0,7, preferably between 0,02 - 0,5 and especially between 0,05 - 0,3.

20. Method according to one of the claims 13 to 19, with the coating being made with having a thickness between 10 $\mu$m -1500 $\mu$m, preferably between 30 $\mu$m - 1200 $\mu$m, especially between 50 $\mu$m - 1000 $\mu$m.

21. Method according to one of the claims 13 to 20, with the device being a mould, a roller, a drum, a chute or a conduit.

FIG. 1

FIG. 2

FIG. 3

Europäisches
Patentamt

European
Patent Office

Office européen
des brevets

# EUROPEAN SEARCH REPORT

Application Number

EP 13 15 0024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 2 039 879 A (UNITED GLASS LTD) 20 August 1980 (1980-08-20) * the whole document * | 1-21 | INV. C03B40/02 |
| Y | EP 0 487 273 A1 (SULZER PLASMA TECH [US]) 27 May 1992 (1992-05-27) * the whole document * | 1-21 | |
| Y | DE 44 18 517 C1 (DIFK DEUTSCHES INST FUER FEUER [DE]) 20 July 1995 (1995-07-20) * the whole document * | 1-21 | |
| Y | EP 0 694 627 A1 (MTU MUENCHEN GMBH [DE]; STARCK H C GMBH CO KG [DE]) 31 January 1996 (1996-01-31) * the whole document * | 1-21 | |
| Y | DE 24 13 382 A1 (DAIMLER BENZ AG) 18 December 1975 (1975-12-18) * the whole document * | 1-21 | |
| A | JP 2004 026563 A (FUJI ELECTRIC HOLDINGS) 29 January 2004 (2004-01-29) * the whole document * | 1-21 | TECHNICAL FIELDS SEARCHED (IPC) C03B |
| A | GB 1 333 055 A (GLASS BULBS LTD) 10 October 1973 (1973-10-10) * the whole document * | 1-21 | |
| A | JP S63 297232 A (OLYMPUS OPTICAL CO) 5 December 1988 (1988-12-05) * abstract * | 1-21 | |

The present search report has been drawn up for all claims

| Place of search | Date of completion of the search | Examiner |
|---|---|---|
| The Hague | 27 June 2013 | Kövecs, Monika |

EPO FORM 1503 03.82 (P04C01)

**ANNEX TO THE EUROPEAN SEARCH REPORT**

**ON EUROPEAN PATENT APPLICATION NO.** EP 13 15 0024

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2013

| Patent document cited in search report | | | Publication date | Patent family member(s) | | | Publication date |
|---|---|---|---|---|---|---|---|
| GB 2039879 | A | | 20-08-1980 | NONE | | | |
| EP 0487273 | A1 | | 27-05-1992 | DE | 69110416 | D1 | 20-07-1995 |
| | | | | DE | 69110416 | T2 | 12-10-1995 |
| | | | | EP | 0487273 | A1 | 27-05-1992 |
| | | | | US | 5196471 | A | 23-03-1993 |
| | | | | US | 5434210 | A | 18-07-1995 |
| DE 4418517 | C1 | | 20-07-1995 | NONE | | | |
| EP 0694627 | A1 | | 31-01-1996 | DE | 4427264 | A1 | 01-02-1996 |
| | | | | EP | 0694627 | A1 | 31-01-1996 |
| | | | | JP | H08114150 | A | 07-05-1996 |
| DE 2413382 | A1 | | 18-12-1975 | NONE | | | |
| JP 2004026563 | A | | 29-01-2004 | NONE | | | |
| GB 1333055 | A | | 10-10-1973 | NONE | | | |
| JP S63297232 | A | | 05-12-1988 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102004036343 A1